# EUROPEAN PATENT SPECIFICATION

(11) **EP 3 861 259 B1**
(45) Date of publication and mention of the grant of the patent: **09.10.2024**
(21) Application number: 19856427.0
(22) Date of filing: 10.12.2019
(51) Int. Cl.: F24F 1/46, F24F 5/00, F24D 5/12, F24F 13/20, F24F 140/50

(54) **COMPRESSOR WALL**
VERDICHTERWAND
PAROI DE COMPRESSEUR

(43) Date of publication of application: 11.08.2021
(73) Proprietor: DEHUMIDIFIED AIR SOLUTIONS, INC., Saint Laurent, QC H4S 1R3 (CA)
(72) Inventor: THERIAULT, Jonathan, Saint Laurent Québec H4S 1R3 (CA)
(74) Representative: Wright, Howard Hugh Burnby
(86) International application number: PCT/IB2019/060635
(87) International publication number: WO 2021/116731

(56) References cited:
- WO-A1-2018/022503
- WO-A1-86/00977
- WO-A2-2010/079217
- DE-A1- 3 013 518
- US-A- 5 402 844
- US-A1- 2008 053 114
- US-A1- 2010 031 686
- US-A1- 2018 142 935
- US-B2- 8 627 674

## Description

### FIELD OF THE INVENTION

The present invention relates to the technical field of air management systems. It is provided by claim 1. Embodiments of the present invention relate generally to dehumidification and air conditioning systems for indoor spaces. Particular embodiments find use in indoor pool rooms and indoor agricultural grow rooms, both of which have extensive dehumidification and air conditioning needs. However, the disclosed technology may be used in connection with any other type of HVAC application. The demands of the needs in these types of rooms can vary significantly, either as a result of the different activities conducted in the room, the number of people and/or the number of plants in the room at any particular time, the time of day, the annual seasonal effect on the building, and/or various combinations thereof. This disclosure seeks to provide an efficient way to manage and scale (either up or down) dehumidification and air conditioning needs for interior spaces.

### BACKGROUND

Designing or specifying equipment for an indoor pool environment or an indoor grow house /grow room environment can present challenges. Specifically, these challenges can include properly adjusting the indoor air environment, which can be exacerbated by the fact that the equipment must be designed to handle a maximum load, which is not always the load experienced in the environment. For example, pool room dehumidification equipment must be able to dehumidify the room when an absolute maximum number of bathers is present. However, there are many instances when fewer than the maximum number of bathers will be enjoying the pool room environment.

Additionally, with indoor pool environments, there is a complex set of factors to balance. These factors include but are not limited to room size, pool activity levels, expected and actual capacity, inside air and water temperatures, air distribution, outside air temperatures and humidity ranges, proper building features, HVAC and humidity control design, operating and maintenance costs, along with a number of other factors, as well as ultimately, the need to meet patron expectations. These factors may all be interrelated on various levels. Similarly, with indoor grow room environments, various factors that can present challenges include but are not limited to a desire for the environment to house a varied number of plants and/or varied types of plants, which may all exhibit various differences in carbon dioxide consumption, oxygen offload, and perspiration; necessary light levels; time of day; desired humidification level; and/or desired temperature level. The above-described pool environment factors may also be present. Getting any one of these factors wrong in the environment can lead to problems, and potentially expensive and/or frustrating results for the indoor environment owners, operators, and patrons.

As discussed above, current equipment for these environments must be designed to manage a maximum capacity, whether a maximum bather capacity, a maximum plant capacity, or other expectations. However, maximum capacity may not always be reached. For example, an indoor pool may be designed with equipment that is required to manage an environment for a capacity of 50-60 people. In the instance when only two or three people are in the pool room, the equipment must still typically operate at the same or similar levels required for maximum capacity. This can result in wasted energy. The same example may be envisioned for an indoor grow room environment. If the indoor grow room environment is designed with equipment that is required to manage plants within a certain square footage, but only half of the environment is filled with plants, the equipment must still typically operate at the same or similar levels required for maximum capacity. This can also result in wasted energy.

Additionally, at nighttime, plants expel large amounts of moisture which increases the level of humidity in the grow room. This excess moisture needs to be kept under control in order to allow the plants to thrive. The disclosed technology is designed to incrementally increase the dehumidification capacity to match the load required at any given point. Furthermore, in the daytime, the grow room may require a significant reduction in dehumidification needs and an increase in cooling needs, due to the daylight lighting load. The disclosed technology can help maintain a steady state with the appropriate capacity matching. WO 2018/022503 A1 describes a racked modular system for heating and/or cooling requirements.

### BRIEF SUMMARY

Embodiments of the present disclosure provide a system that fragments unit cooling in dehumidification capacity into incremental sizes. The general goal is that only the appropriate amount of capacity is in use for systems at any given need. This can provide better room control and can reduce the amount of capacity cycling typically required by systems that only incorporate one or two large, many ton compressors.

Specifically, according to the invention, there is provided an air management system according to claim 1. In one example, the system is mounted with respect to an indoor pool. In an alternate example, the system is mounted with respect to an indoor growing room or greenhouse. In other examples, the system may be used in connection with any other type of HVAC application. These include but are not limited to air-conditioning and dedicated outdoor air systems (DOAS).

It is generally desirable that each circuit within the plurality of circuits is configured to be separately removable from the system, and the system is configured to continue to function with one or more circuits removed from the system.

The system may include one or more fluid pumps, one or more check valves, one or more modulating valves, one or more filters, or any combination thereof as long as within the scope of the claims. These may be shared features, that function to flow the fluid through the hydronic loop. It is possible for each circuit in the plurality of circuits to range in size anywhere from about 2 to about 40 tons.

Another example provides a method for maintaining an indoor environment, according to claim 10.

### BRIEF DESCRIPTION OF THE DRAWINGS

Figure 1 shows a schematic view of one embodiment of the disclosure.
Figure 2A shows a side perspective view of a single circuit that may be used in connection with this disclosure.
Figure 2B shows the single circuit of Figure 2A without the housing in place.
Figure 3 shows a front plan view of a plurality of circuits and a master housing.
Figure 4 shows a front plan view of Figure 3 with additional conduits to complete the hydronic loop.
Figure 5 shows a top perspective view of one embodiment of a compressor wall disclosed herein.
Figure 6A shows a side plan view of Figure 5.
Figure 6B shows a side schematic view of Figure 5.
Figure 7 shows a top plan view of Figure 5.

### DETAILED DESCRIPTION

Matching the unit capacity to the load in the desired space is often not well executed due to current limitations of equipment. For example, it is often the case that one or more 20 or 30 ton circuits are installed for indoor environment management. However, if a load only requires 2 tons, a 20 or a 30 ton circuit must still be run.

Embodiments of the present invention thus provide a compressor wall system 10 that incorporates a plurality or series of smaller circuits 12 to achieve the required capacity modulation. Generally, providing a series of smaller circuits 12 can better match a given load in real time as opposed to a single larger circuit or multiple larger circuits. This allows the system to achieve a required capacity modulation by only activating the number of circuits required to reach the amount of capacity for the current need.

In a specific example, four to sixteen smaller circuits 12 may comprise the system 10. These smaller circuit 12 may be from about 3-12 tons. In specific examples, the compressors may be 6-8 ton compressors. Specific tests have been run with 6.33 ton and 7.8 ton compressors with good results. It should be understood that each circuit is capable of operating independently from every other circuit. The circuits operate on their own, but may be mounted in a module such that they provide an array of independently operating circuits. If a single circuit is removed, it does not affect the operation of the remaining circuits.

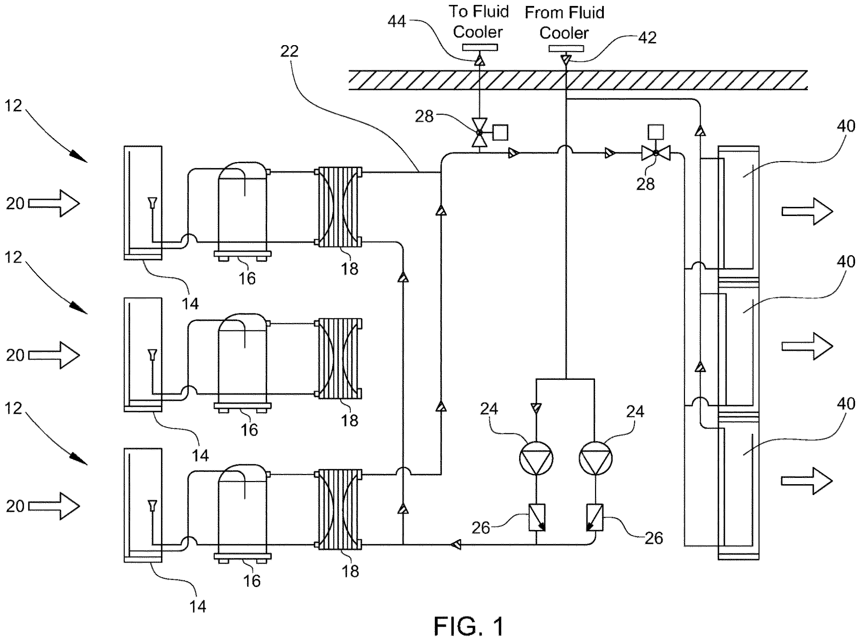

FIG. 1 illustrates an exemplary piping schematic illustrating the use of three smaller circuits 12. Although three circuits 12 are illustrated in the schematic, it should be understood that more circuits may be added in parallel to provide a larger matrix of circuits, as described further below. The system is designed to be scalable up or down dependent upon load. As shown, each smaller circuit 12 incorporates an evaporator 14, a compressor 16, and a plate heat exchanger 18. As general background, in use, air flows across the evaporator 14 as illustrated by airflow arrow 20. Evaporator coils in the evaporator 14 function to absorb (or remove) heat from the air. The compressor 16 circulates refrigerant necessary for heat exchange and applies energy to the refrigerant. The constant flow of refrigerant results in constant heat transferring. The compressor 16 raises the temperature and pressure of the vapor refrigerant that leaves the evaporator 14. After the condenser 16, the refrigerant typically flows through an expansion valve, where it experiences a pressure drop. Finally, as refrigerant flows through the heat exchanger 18, it condenses from vapor form to liquid form, giving off heat in the process. The evaporator 14 can draw heat from the region that is to be cooled. The vaporized refrigerant returns to the compressor 16 to restart the cycle. Heat may be rejected external to the system (outside) or if heat is needed within the environment, it can be delivered back inside to the environment. This transfer may be referred to herein as a hydronic loop 22.

As shown by the hydronic loop 22 of FIG. 1, the series of circuits 12 may share one or more fluid pumps 24 and/or one or more check valves 26. The fluid pumps 24 function to move a fluid mixture comprised of water and glycol throughout the hydronic loop 22. The check valves 26 function to prevent backflow or reverse flow into the fluid pumps 24. The circuits 12 may also share one or more modulating valves 28. The modulating valves 28 function to control the amount of flow and/or flow rate through the hydronic loop 22. Although the circuits share various valves and pumps in common with the hydronic loop 22, it should be understood that each individual circuit is provided with the components required to operate the circuit, such that it operates independently from the other circuits. FIG. 1 also illustrates hydronic reheat coils 40. The heat being rejected in each brazed plate heat exchanger 18 can then be circulated into a hydronic reheat coil 40 or to the outdoor fluid cooler via modulating valve 28.

Airflow and coolant flow through the system as follows. Coolant fluid from a fluid cooler enters the system at inlet 42, flowing through a conduit and moved via one or more fluid pumps 24. The fluid is directed past and through a heat exchanger 18. Airflow 20 also enters the system across evaporators 14. Heat from airflow is transferred to the refrigerant or coolant fluid, which cools the air and warms the coolant fluid. The warmed coolant fluid is then delivered to a fluid cooler via an outlet 44. The cooled air passes over one or more hydronic reheat coils 40 and is delivered to the environment. If warmed air is needed in the environment, rather than exhausting warmed air external to the system, it may be routed across the hydronic reheat coils 40 and delivered to the environment.

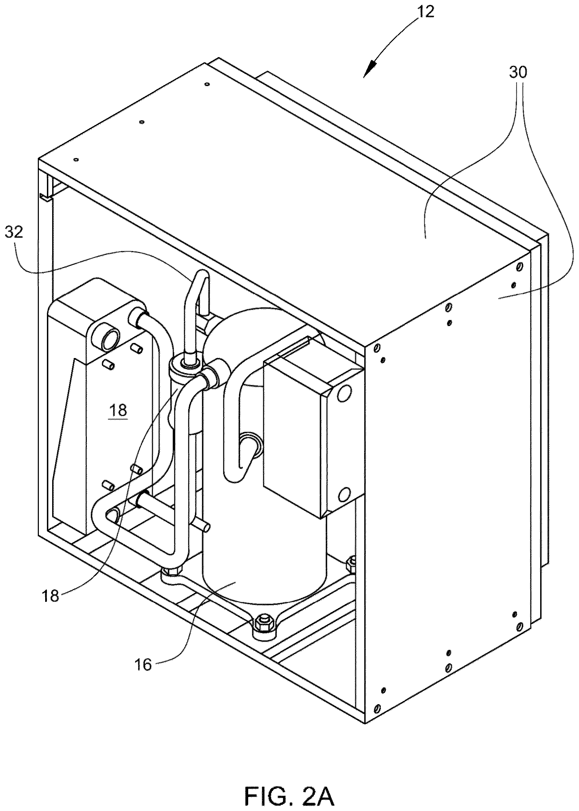

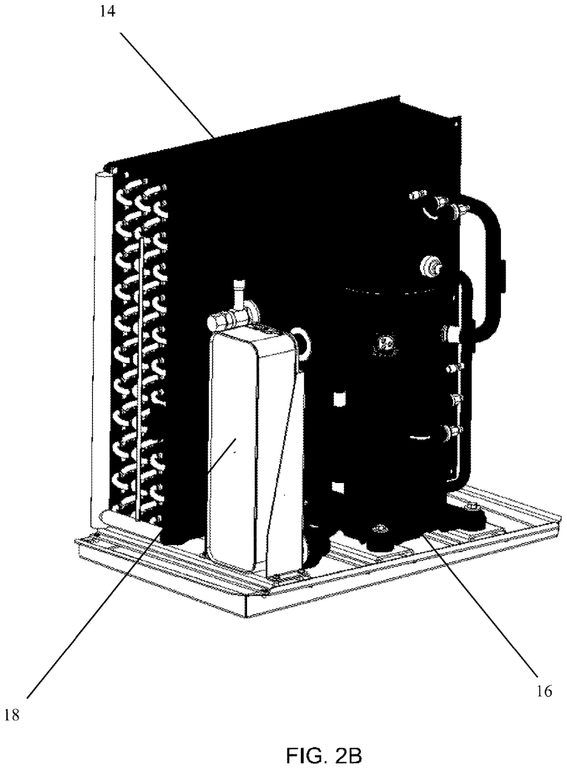

FIGS. 2A and 2B illustrate an example of a single circuit 12 contained within a module housing 30. This circuit 12 incorporates an evaporator 14, a compressor 16, and a plate heat exchanger 18, as well as accompanying conduits 32 that are configured to manage flow therebetween.

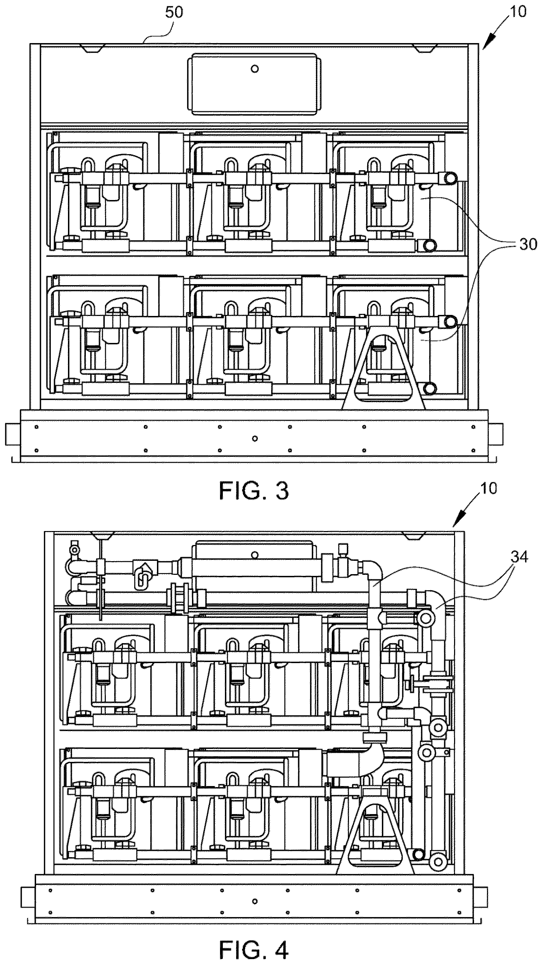

FIG. 3 illustrates a front plan view of a plurality of module housings 30 mounted within a single system 10. This example shows a 3x2 embodiment, with three module housings 30 in two rows, for a total of six module housings 30 forming the system. It should be understood that the system configuration may instead be 2x3, 2x2, 3x3, 4x2, 2x4, 4x3, 3x4, 4x4, 5x2, 2x5, 5x3, 3x5, 5x4, 4x5, 5x5, 6x2, 2x6, 6x3, 3x6, 6x4, 4x6, 6x5, 6x5, 6x6, 7x2, 2x7, 7x3, 3x7, 7x4, 4x7, 7x5, Sx7, 6x7, 7x6, 7x7, 8x2, 2x8, 8x3, 3x8, 8x4, 4x8, 8x5, 5x8, 8x6, 6x8, 8x7, 7x8, 8x8, and so forth up to any appropriate combination of module housings 30. FIG. 4 illustrates the configuration of FIG. 3 with added connection tubing 34, which connects each module housing 30 to the hydronic loop 22 as a whole.

One of the benefits of the disclosed system 10 is that by providing an array of circuits 12 contained in individual module housings 30 within a single system 10, it is easy to interchange or otherwise replace one of the circuits 12 when needed. For example, in a 4 x 4 array that has sixteen circuits 12, if a single circuit 12 malfunctions, it may be replaced or repaired without affecting the remainder of the circuits or their functioning. Additionally, until that single circuit can be replaced or repaired, the entire system 10 can continue to run at almost capacity. In this example, fifteen circuits are still available.

An additional benefit of the disclosed system 10 is that it is possible to maintain a load at any given point by turning on or off any of the circuits 12 in the system 10. As an example, a traditional system may have two 30-ton circuits managing a particular environment. It may be the case that a particular load only requires 15 tons at a particular level of capacity. However, even if only one circuit is turned on in this example, 30 tons are in use, meaning that extra energy is expended/wasted. By contrast, if a system incorporates twelve 6-ton circuits managing a particular environment and only 15 tons is required, it is possible to only activate three circuits to deliver 18 tons, resulting in a great energy saving. In the example provided, it is possible to manage a load as low as 6 tons with only a single circuit. This allows the system to easily match the load in real time by managing activation of only the number of circuits required although a complete load is always available when/if needed. A greater number of circuits and smaller circuits may also be used.

As shown by FIGS. 3 and 4, the system 10 may include a master housing 50 that houses or otherwise encloses the individual module housings 30, each of which supports an individual circuit 12. For removal or replacement, it is possible to provide the module housings 30 on slidable trays that can slide in and out of the master housing 50 on a track, much like drawers. When the user pulls a drawer forward, a lifting device may be used in order to remove the circuit. Additionally or alternatively, it is possible to provide a back or front or side wall that can slide open, allowing front, back, and/or side access to the module housings 30.

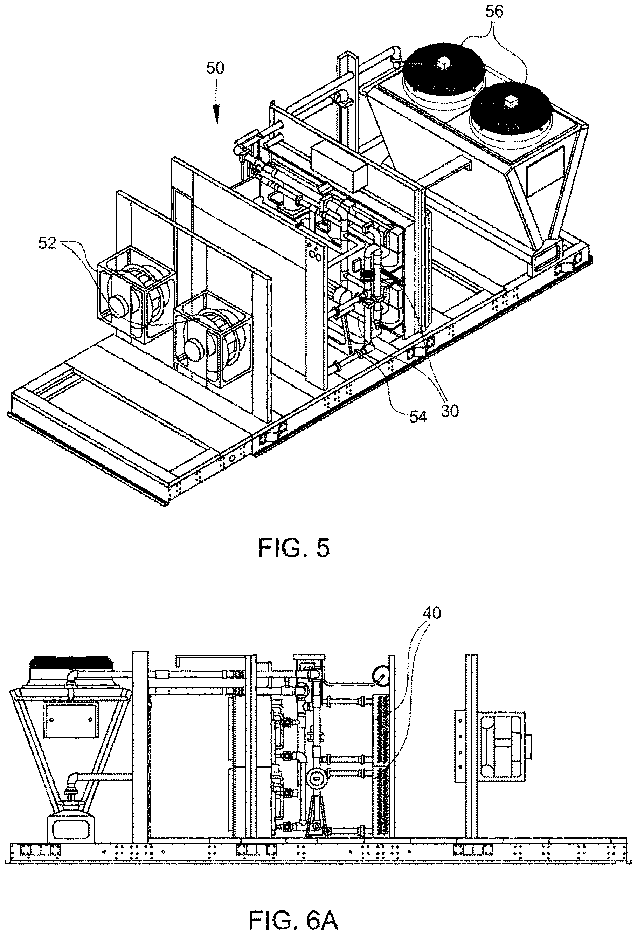

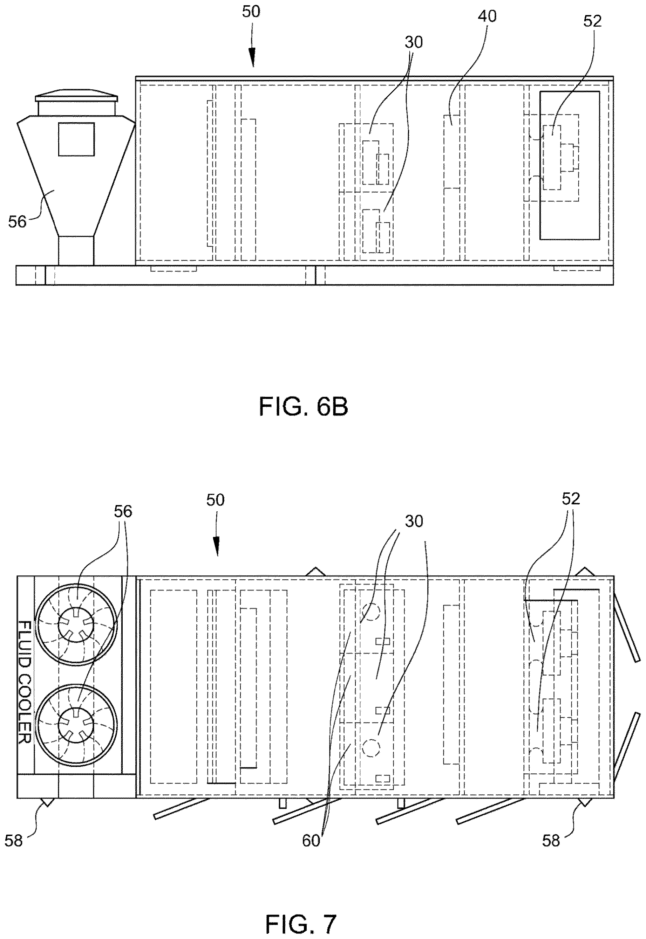

FIG. 5 shows a side perspective view of an exemplary master housing 50 that supports one or more blowers/air movers, a rack 54 supporting a plurality of module housings 30, and air expelling units 56. FIG. 6A shows a side plan view of the same configuration, and FIG. 6B shows the same configuration schematically. FIG. 7 shows a top plan view of the same configuration. As shown in these figures, one or more lifting lugs 58 may be provided that can be used to lift the equipment during installation. FIG. 7 also shows filters 60. The filters 40 function to ensure that the air delivered to the environment is filtered and free of allergens, dust, or other debris that may accumulate in the system.

In a specific example, the circuits 12 may be individual water-cooled air conditioning modules that can easily be replaced if one module experiences difficulty. The individual modules may all be connected to a single fluid cooled loop (hydronic loop 22) that is cooled by fluid coils. The fluid coils may either be located in the air handling unit for reheat purposes or may be located outdoors for rejection of heat to the outdoors. This may be configured to be switched in use as well. For example, if heat is needed inside the environment, heat may be routed inside. If the inside environment needs to be cooled, the heat may be routed outside the environment. A valve, dial, or other modulator may be provided in order to actuate this movement of warmed air.

It is possible to vary or alter the number of modules or the size of each of the module components. It is also possible to vary the location of the components. In summary, there is provided an array of modularized circuits that work collectively to provide a system that can manage an indoor environment. The system is designed in order to match the delivered load more closely to the required load then has been done in the past. The system is also designed in order to enhance and ease of serviceability of the individual circuits when needed.

Advantages of the disclosed system include but are not limited to enhanced capacity control; ease of serviceability; a more compact air handling unit; redundancy in compressor capacity at partial loads; improved energy efficiency at partial loads; decrease in manufacturing labor.

The traditional and prevailing thought had been that it is more costly to build a system using a greater number of smaller circuits than it is to provide the traditional larger circuit configuration with fewer circuits. The present inventors have broken that paradigm by designing the disclosed system.

The subject matter of certain embodiments of this disclosure is described with specificity to meet statutory requirements, but this description is not necessarily intended to limit the scope of the invention which is defined in the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described and as long as within the scope of the claims.

It should be understood that different arrangements of the components depicted in the drawings or described above, as well as components and steps not shown or described are possible. Similarly, some features and sub-combinations are useful and may be employed without reference to other features and sub-combinations. Embodiments of the invention have been described for illustrative and not restrictive purposes, and alternative embodiments will become apparent to readers of this patent. Changes and modifications, additions and deletions may be made to the structures and methods recited above and shown in the drawings without departing from the scope of the invention defined in the following claims.

## Claims

1. An air management system, comprising:
a plurality of circuits (12), each circuit comprising an evaporator (14), a compressor (16), and a plate heat exchanger (18), a refrigerant and an expansion valve arranged between the compressor (16) and the plate heat exchanger (18), the plate heat exchanger being a condenser,
wherein the evaporator (14) is configured to transfer heat from an air flow passing through the evaporator to a refrigerant flowing through the evaporator (18);
wherein each circuit in the plurality of circuits (12)is configured to operate independently of the other circuits,
wherein the system comprises a modular array having removable module housings (30) and wherein each of the plurality of circuits (12) is provided in a respective module housing (30) and wherein the plurality of circuits are fluidly connected via a hydronic loop (22),
the air management system further comprising:
a fluid cooler configured to provide a coolant fluid to the hydronic loop (22); and
a hydronic reheat coil (40) configured to remove heat from the coolant fluid in the hydronic loop (22) and to add heat to the air flow passing through the system, the system being further configured for the fluid cooler or the hydronic reheat coil (40) to receive the warmed coolant fluid from the hydronic loop after its passage through the heat exchanger 18 via one or more modulating valves 28.

2. The system of claim 1, wherein the system comprises a master housing (50) and wherein the said removable module housings (30) are mounted within the master housing (50).

3. The system of any preceding claim, wherein the circuits (12) are configured to receive airflow and are configured to cool or warm the received airflow and expel cooled or warmed air into an indoor environment.

4. A combined system comprising the air management system of any preceding claim, and an indoor pool, wherein the said air management system is mounted to said indoor pool.

5. A combined system comprising the air management system of any of claims 1 to 3, and an indoor growing room or greenhouse, wherein the said air management system is mounted to the said indoor growing room or greenhouse.

6. A combined system comprising the air management system of any of claims 1 to 3, and an HVAC system, and air conditioning system, or a dedicated outdoor air system (DOAS)" wherein the said air management system is connected with said HVAC system, and air conditioning system, or dedicated outdoor air system (DOAS).

7. The system of any preceding claim, wherein each circuit within the plurality of circuits (12) is configured to be separately removable from the system, and wherein the system is configured to continue to function with one or more circuits removed from the system.

8. The system of any preceding claim, further comprising one or more fluid pumps (24), one or more check valves (26), one or more modulating valves (28), one or more filters (60), or any combination thereof.

9. The system of any preceding claim, wherein each circuit in the plurality of circuits (12) ranges from about 2 to about 40 tons.

10. A method for maintaining an indoor environment, comprising:
providing an air management system of any of claims 1 to 9;
removing at least one of the circuits from the plurality of circuits (12) from the system for repair or replacement; and
running the air management system without the removed circuit.

## Patentansprüche

1. Luftmanagementsystem, umfassend:
eine Vielzahl von Kreisläufen (12), wobei jeder Kreislauf einen Verdampfer (14), einen Kompressor (16) und einen Plattenwärmetauscher (18), ein Kühlmittel und ein Expansionsventil umfasst, das zwischen dem Kompressor (16) und dem Plattenwärmetauscher (18) angeordnet ist, wobei der Plattenwärmetauscher ein Kondensator ist,
wobei der Verdampfer (14) dazu beschaffen ist, Wärme von einem durch den Verdampfer strömenden Luftstrom auf ein durch den Verdampfer (18) strömendes Kühlmittel zu übertragen,
wobei jeder Kreislauf in der Vielzahl von Kreisläufen (12) dazu beschaffen ist, unabhängig von den anderen Kreisläufen zu arbeiten,
wobei das System eine modulare Anordnung mit abnehmbaren Modulgehäusen (30) umfasst und wobei jeder der Vielzahl von Kreisläufen (12) in einem jeweiligen Modulgehäuse (30) vorgesehen ist und wobei die Vielzahl von Kreisläufen über eine Hydronikschleife (22) fließverbunden ist,
das Luftmanagementsystem ferner umfassend:
einen Flüssigkeitskühler, der dazu beschaffen ist, der Hydronikschleife (22) ein Kühlmittel bereitzustellen, und
eine Hydronik-Nachheizspule (40), die dazu beschaffen ist, Wärme aus der Kühlflüssigkeit in der Hydronikschleife (22) zu entfernen und dem durch das System strömenden Luftstrom Wärme zuzuführen, wobei das System ferner so beschaffen ist, dass der Flüssigkeitskühler oder die Hydronik-Nachheizspule (40) die erwärmte Kühlflüssigkeit aus der Hydronikschleife nach ihrem Durchgang durch den Wärmetauscher 18 über ein oder mehrere Modulationsventile 28 empfängt.

2. System nach Anspruch 1, wobei das System ein Hauptgehäuse (50) umfasst und wobei die entfernbaren Modulgehäuse (30) innerhalb des Hauptgehäuses (50) montiert sind.

3. System nach einem der vorhergehenden Ansprüche, wobei die Kreisläufe (12) dazu beschaffen sind, einen Luftstrom zu empfangen und den empfangenen Luftstrom zu kühlen oder zu erwärmen und gekühlte oder erwärmte Luft in eine Innenumgebung auszustoßen.

4. Kombiniertes System, umfassend das Luftmanagementsystem nach einem der vorhergehenden Ansprüche und ein Hallenbad, wobei das Luftmanagementsystem an dem Hallenbad montiert ist.

5. Kombiniertes System, umfassend das Luftmanagementsystem eines der Ansprüche 1 bis 3 und einen Indoor-Anbauraum oder ein Gewächshaus, wobei das Luftmanagementsystem an dem Indoor-Anbauraum oder Gewächshaus montiert ist.

6. Kombiniertes System, umfassend das Luftmanagementsystem eines der Ansprüche 1 bis 3 und ein HVAC-System und eine Klimaanlage oder ein dediziertes Außenluftsystem (DOAS), wobei das Luftmanagementsystem mit dem HVAC-System und der Klimaanlage oder dem dedizierten Außenluftsystem (DOAS) verbunden ist.

7. System eines der vorhergehenden Ansprüche, wobei jeder Kreislauf innerhalb der Vielzahl von Kreisläufen (12) dazu beschaffen ist, separat aus dem System entfernt zu werden, und wobei das System dazu beschaffen ist, weiterhin zu funktionieren, wenn ein oder mehrere Kreisläufe aus dem System entfernt werden.

8. System eines der vorhergehenden Ansprüche, ferner umfassend eine oder mehrere Flüssigkeitspumpen (24), ein oder mehrere Rückschlagventile (26), ein oder mehrere Modulationsventile (28), einen oder mehrere Filter (60) oder eine beliebige Kombination davon.

9. System nach einem der vorhergehenden Ansprüche, wobei jeder Kreislauf in der Vielzahl von Kreisläufen (12) im Bereich von etwa 2 bis etwa 40 Tonnen liegt.

10. Verfahren zur Aufrechterhaltung einer Innenraumumgebung, umfassend:
Bereitstellen eines Luftmanagementsystems nach einem der Ansprüche 1 bis 9,
Entfernen von mindestens einem der Kreisläufe aus der Vielzahl von Kreisläufen (12) aus dem System zur Reparatur oder zum Austausch und
Betreiben des Luftmanagementsystems ohne den entfernten Kreislauf.

## Revendications

1. Système de gestion de l'air, comprenant :
une pluralité de circuits (12), chaque circuit comprenant un évaporateur (14), un compresseur (16) et un échangeur de chaleur à plaques (18), un réfrigérant et un détendeur disposés entre le compresseur (16) et l'échangeur de chaleur à plaques (18), l'échangeur de chaleur à plaques étant un condenseur,
dans lequel l'évaporateur (14) est configuré pour transférer la chaleur d'un flux d'air traversant l'évaporateur à un réfrigérant circulant à travers l'évaporateur (18) ;
dans lequel chaque circuit de la pluralité de circuits (12) est configuré pour fonctionner indépendamment des autres circuits, dans lequel le système comprend un ensemble modulaire ayant des boîtiers de module amovibles (30) et dans lequel chacun de la pluralité de circuits (12) est disposé dans un boîtier de module respectif (30) et dans lequel la pluralité de circuits sont reliés fluidiquement via une boucle hydronique (22),
le système de gestion de l'air comprenant en outre :
un refroidisseur de fluide configuré pour fournir un fluide de refroidissement à la boucle hydronique (22) ; et
un serpentin de réchauffage hydronique (40) configuré pour éliminer la chaleur du fluide de refroidissement dans la boucle hydronique (22) et pour ajouter de la chaleur au flux d'air traversant le système, le système étant en outre configuré pour que le refroidisseur de fluide ou le serpentin de réchauffage hydronique (40) reçoive le fluide de refroidissement réchauffé provenant de la boucle hydronique après son passage à travers l'échangeur de chaleur (18) via une ou plusieurs vannes de modulation (28).

2. Système selon la revendication 1, dans lequel le système comprend un boîtier principal (50) et dans lequel lesdits boîtiers de module amovibles (30) sont montés à l'intérieur du boîtier principal (50).

3. Système selon l'une quelconque des revendications précédentes, dans lequel les circuits (12) sont configurés pour recevoir un flux d'air et sont configurés pour refroidir ou réchauffer le flux d'air reçu et expulser l'air refroidi ou réchauffé dans un environnement intérieur.

4. Système combiné comprenant le système de gestion de l'air selon l'une quelconque des revendications précédentes, et une piscine intérieure, dans lequel ledit système de gestion de l'air est monté sur ladite piscine intérieure.

5. Système combiné comprenant le système de gestion de l'air selon l'une quelconque des revendications 1 à 3, et une salle de culture intérieure ou une serre, ledit système de gestion de l'air étant monté sur ladite salle de culture intérieure ou serre.

6. Système combiné comprenant le système de gestion de l'air selon l'une quelconque des revendications 1 à 3, et un système CVC, un système de climatisation ou un système d'air extérieur dédié (DOAS), ledit système de gestion de l'air étant connecté audit système CVC, à un système de climatisation ou à un système d'air extérieur dédié (DOAS).

7. Système selon l'une quelconque des revendications précédentes, dans lequel chaque circuit parmi la pluralité de circuits (12) est configuré pour être retiré séparément du système, et dans lequel le système est configuré pour continuer à fonctionner avec un ou plusieurs circuits retirés du système.

8. Système selon l'une quelconque des revendications précédentes, comprenant en outre une ou plusieurs pompes à fluide (24), un ou plusieurs clapets anti-retour (26), une ou plusieurs vannes de modulation (28), un ou plusieurs filtres (60), ou toute combinaison de ceux-ci.

9. Système selon l'une quelconque des revendications précédentes, dans lequel chaque circuit de la pluralité de circuits (12) pèse entre environ 2 et environ 40 tonnes.

10. Procédé de maintenance d'un environnement intérieur, comprenant :
la fourniture d'un système de gestion de l'air selon l'une quelconque des revendications 1 à 9 ;
le retrait d'au moins l'un des circuits de la pluralité de circuits (12) du système pour réparation ou remplacement ; et
le fonctionnement du système de gestion de l'air sans le circuit retiré.
